# EUROPEAN PATENT APPLICATION

(11) **EP 4 246 223 A1**
(43) Date of publication of application: **20.09.2023**
(21) Application number: 23157787.5
(22) Date of filing: 21.02.2023
(51) Int. Cl.: G03B 15/05, G06K 7/10, H04N 1/028, G02B 3/06

(54) **LIGHTING DEVICE AND IMAGE-CAPTURING SYSTEM**

(30) Priority: 16.03.2022 JP 2022041077; 15.11.2022 JP 2022182196
(71) Applicant: Ricoh Company, Ltd., Tokyo 143-8555 (JP)
(72) Inventor: HATAZAKI, Soya, Tokyo, 143-8555 (JP)
(74) Representative: J A Kemp LLP

(57) **Abstract**

A lighting device (400) includes at least two illumination units (400A, 400B) including: a first illumination unit (400A) including: first multiple light sources (430A) arranged in a first arrangement direction, and each of the first multiple light sources (430A) configured to emit a first light beam; and a first condensing optical system (440A) arranged in the first arrangement direction parallel to the first multiple light sources (430A), the first condensing optical system (440A) configured to concentrate the first light beam into a line shape; and a second illumination unit (400B) including: second multiple light sources (430B) arranged in a second arrangement direction, and each of the second multiple light sources (430B) configured to emit a second light beam; and a second condensing optical system (440B) arranged in the second arrangement direction parallel to the second multiple light sources (430B), the second condensing optical system (440B) configured to concentrate the second light beam into the line shape. The first illumination unit and the second illumination face outward.

## Description

### BACKGROUND

### Technical Field

The present disclosure relates to a lighting device and an image-capturing system.

### Related Art

Japanese Unexamined Patent Application Publication No. 2007-225591 describes a lighting device including multiple light sources arranged in a predetermined direction and a condenser lens extending in the direction of the arrangement of the light sources. In the lighting device, light from each light source passes through the condenser lens and is linearly concentrated at a position separated from the condenser lens by a predetermined distance. The lighting device includes a diffusing lens in an optical path between the light sources and the focal positions to diffuse light emitted from the light sources in a direction in which the light sources are arranged in parallel.

Japanese Unexamined Patent Application Publication No. 2016-051203 describes an optical information reading device including a projection system for projecting light from the light sources to an object to be read, using the projector lens; a light receiving system for forming an image with light reflected from the object on a light receiving surface of an imaging element using a light receiving lens; and a signal processing system for receiving a signal output from the imaging element and reading information of the object. The projection system projects light in a strip-shaped range that is long in a predetermined direction and short in a width direction substantially orthogonal to the longitudinal direction (i.e., the predetermined direction) on a light projection plane substantially orthogonal to an optical axis of the light receiving lens. The projection lens has an incident surface on which light from the light source is incident and which has a uniformly concave shape in a longitudinal direction and a uniformly convex shape in a width direction. The exit surface of the projection lens from which the light incident on the incident surface exits toward the light projection plane is formed as a free-form surface so as to obtain a predetermined light quantity distribution in the longitudinal direction of the light projection plane.

However, the technologies as disclosed in Japanese Unexamined Patent Application Publication No. 2007-225591 and Japanese Unexamined Patent Application Publication No. 2016-051203 have difficulty in uniform illumination of a wide irradiation range (for example, from a short distance to a long distance with a large light distribution angle).

### SUMMARY

In view of the above circumstances, it is an object of the disclosed technology to provide a lighting device that allows a uniform illumination of a wide irradiation range and an image-capturing system incorporating the lighting device.

An embodiment of the present disclosure provides a lighting device including at least two illumination units including: a first illumination unit including: first multiple light sources arranged in a first arrangement direction, and each of the first multiple light sources configured to emit a first light beam; and a first condensing optical system arranged in the first arrangement direction parallel to the first multiple light sources, the first condensing optical system configured to concentrate the first light beam into a line shape; and a second illumination unit including: second multiple light sources arranged in a second arrangement direction, and each of the second multiple light sources configured to emit a second light beam; and a second condensing optical system arranged in the second arrangement direction parallel to the second multiple light sources, the second condensing optical system configured to concentrate the second light beam into the line shape. The first illumination unit and the second illumination face outward.

Another embodiment of the present disclosure provides an image-capturing system including: an image-capturing device and the above-described lighting device.

Embodiments of the present disclosure provide a lighting device that allows a uniform illumination of a wide irradiation range and an image-capturing system incorporating the lighting device.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIGS. 1A and 1B are illustrations of a mobile object mounted with a lighting device and an image-capturing system according to an embodiment of the present disclosure;
FIG. 2 is a block diagram of a hardware configuration of the image-capturing system according to an embodiment of the present disclosure;
FIG. 3 is a first diagram of an irradiation range and an image-capturing range of the image-capturing system according to the present embodiment;
FIG. 4 is a second diagram of the irradiation range and the image-capturing range of the image-capturing system according to the present embodiment;
FIGS. 5A and 5B are illustrations of a first example of a conventional illumination optical system;
FIG. 6 is an illustration of a second example of a conventional illumination optical system;
FIGS. 7A, 7B, and 7C are diagrams of a lighting device according to a first embodiment;
FIGS. 8A, 8B, and 8C are diagrams of a lighting device according to a comparative example;
FIGS. 9A, 9B, 9C, and 9D are diagrams of a lighting device according to a second embodiment;
FIGS. 10A, 10B, 10C, and 10D are diagrams of a lighting device according to a comparative example;
FIGS. 11A, 11B, 11C, and 11D are diagrams of a lighting device according to a third embodiment;
FIGS. 12A, 12B, 12C, 12D, and 12E are diagrams of a lighting device according to a fourth embodiment;
FIGS. 13A, 13B, and 13C are diagrams of a lighting device according to a fifth embodiment;
FIGS. 14A, 14B, and 14C are diagrams of a lighting device according to a sixth embodiment; and
FIGS. 15A, 15B, and 15C are diagrams of a lighting device according to a seventh embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Referring now to the drawings, embodiments of the present disclosure are described below. As used herein, the singular forms "a," "an," and "the" are intended to include the plural forms as well, unless the context clearly indicates otherwise.

Embodiments of the present disclosure provide an optical system for a virtual image device, which allows a reduction in the thickness of a light guide that guides image light, a virtual image display device, and a head-mounted display incorporating the optical system.

Hereinafter, a lighting device and an image-capturing system according to the present embodiment will be described in detail with reference to the drawings.

The lighting device and the image-capturing system according to the present embodiment are used, for example, when photographing and inspecting a wall surface of a structure such as a tunnel. There is a demand for each light device to uniformly illuminate an irradiation range (for example, ranging from a close range to a long range, e.g., from 30 cm to 10 m with a wide angle of light distribution of 45 degrees or more) when multiple lighting devices are used to illuminate the wall surface of the tunnel. The present embodiment using two lighting devices for illumination enables a wide irradiation range with a compact structure without using a cylindrical lens for correcting spherical aberration in each lighting device. The image-capturing device for use in tunnel inspection uses a line sensor instead of an area sensor such as a typical digital camera. Accordingly, the lighting device uses line lighting. In other words, the image-capturing range of the image-capturing device and the irradiation range of the lighting device are both line shaped.

### Mobile Object Mounted with Lighting Device and Image-Capturing Device

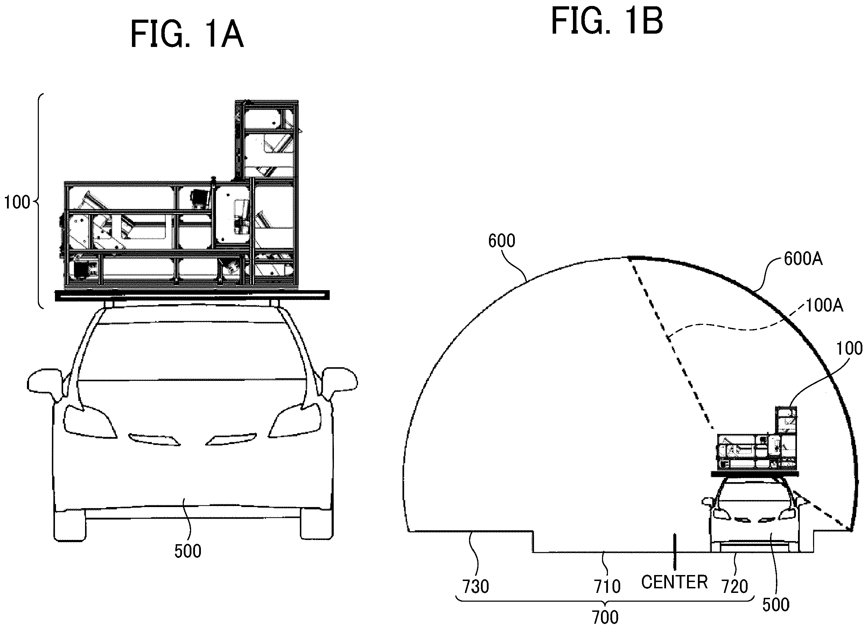

FIGS. 1A and 1B are illustrations of a mobile object mounted with a lighting device and an image-capturing system according to an embodiment of the present disclosure. FIG. 1A is a front view of a vehicle 500, which is an example of a mobile object, as viewed from a direction opposite to the direction of movement of the vehicle. FIG. 1B is an illustration of how the vehicle 500 moves (advances) inside a tunnel 600.

The image-capturing system 100 mounted on the vehicle 500 captures an image of the inner wall of the tunnel 600, which is an example of a subject.

In FIG. 1A, the image-capturing system 100 is fixed onto the roof of the vehicle 500. The portion of the vehicle to which the image-capturing system 100 is attached is not limited to the roof. The image-capturing system 100 may be attached onto a hood at the front or rear of the vehicle or may be attached onto a loading platform if the vehicle is a truck. When the image-capturing system 100 is attached to a roof of a vehicle, the image-capturing system 100 may be attached to the vehicle by using a hook component or the like, similarly to a ski carrier or the like for a vehicle.

In FIG. 1B, a lane 710 is on the left side of the center of the road 700, and another lane 720 is on the right side of the center. The vehicle 500 is moving in lane 720 in a direction toward the front of the drawing sheet.

In this example, a sidewalk 730 is adjacent to the lane 710 (the opposite lane of vehicle 500). Since there is no sidewalk adjacent to the lane 720, the vehicle 500 moves forward while passing close by the tunnel wall surface adjacent to the vehicle 500, unlike the case where there is a sidewalk between the wall surface and the vehicle 500.

The broken line 100A in FIG. 1B indicates the image-capturing range of the image-capturing system 100. In other words, the image-capturing system 100 captures an image of an area 600A (an area indicated by a bold line) within the image-capturing range indicated by the broken line 100A on the wall surface of the tunnel 600. As indicated by the bold line, in the embodiment, the image is captured up to the boundary between the tunnel wall surface (lining portion) and the ground.

Capturing an image with the image-capturing system 100 while moving the vehicle 500 enables a captured image of the wall surface of the right half in the drawing sheet of FIG. 1B (i.e., a captured image of the range from the entrance to the exit of the tunnel 600).

Capturing an image with the image-capturing system 100 while moving the vehicle 500 in the lane 710 opposite to that in FIG. 1B in the opposite direction enables a captured image of the wall surface of the left half in the drawing sheet of FIG. 1B (i.e., a captured image of the range from the entrance to the exit of the tunnel 600).

The captured image of the wall surface in FIG. 1B is joined together with the captured image of the wall surface in another case with the vehicle 500 moving in the lane 710 opposite to that in FIG. 1B in the opposite direction, to provide a captured image of the entire wall surface of the tunnel 600 (i.e., the wall surface from the entrance to the exit of the tunnel 600). In order to create one developed view image by joining the images, it is desirable that the images of the wall surfaces are captured so that the ceiling portions overlap each other. In other words, when the wall surface of the tunnel 600 is captured on going and returning, it is desirable that the image-capturing range for going and the image-capturing range for returning overlap each other in a direction intersecting with the traveling direction of the vehicle 500 while capturing images, so that no portion of the wall surface of the tunnel 600 fails to be captured.

The vehicle 500 is not limited to a vehicle that travels on a road and may be a vehicle that travels on a railroad and is not limited to a vehicle that has power and may be a vehicle that does not have power such as a truck or a handcart. In addition, the mobile object is not limited to a vehicle, and may be an object that moves in the air such as a drone. Further, the tunnel is not limited to a traffic tunnel and may be a tunnel such as a water conduit.

In the present embodiment, the vehicle conforms to the left-hand traffic rule. Accordingly, the image-capturing device is placed to capture an image of the left side in the traveling direction. In a country or a case of right-hand traffic, an image-capturing device is arranged so as to capture an image of the right side in the traveling direction. In this case, a camera unit 300 (an image-capturing device) and an illumination unit 400 (a lighting device), which will be described later, are attached to the vehicle with their orientations rotated by 180 degrees.

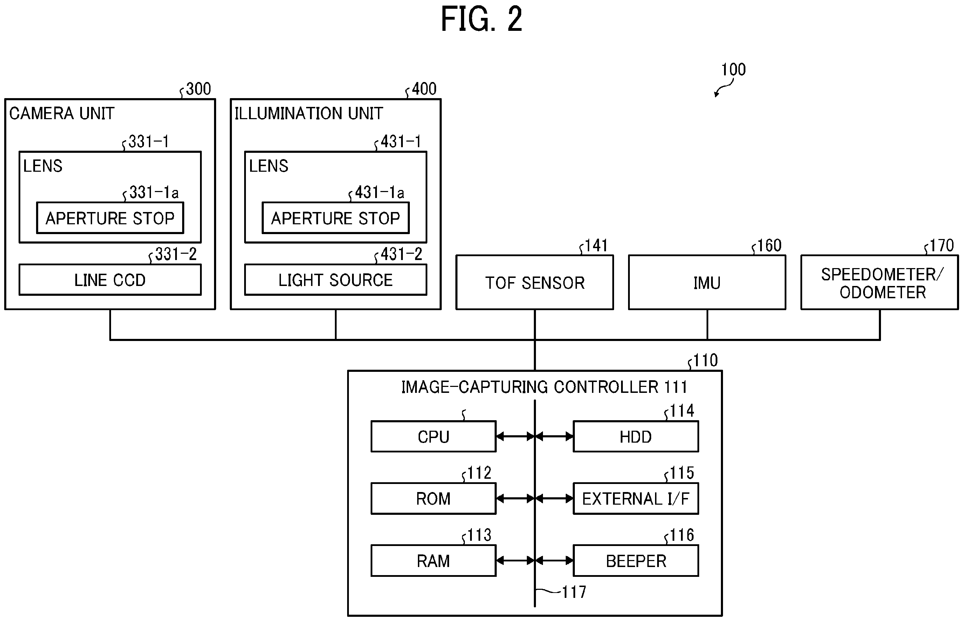

FIG. 2 is a block diagram of a hardware configuration of the image-capturing system 100 according to an embodiment of the present disclosure. The image-capturing system 100 includes a camera unit 300, an illumination unit 400, an image-capturing controller 110, a time-of-flight (TOF) sensor 141, an inertial measurement unit (IMU) 160, and a speedometer/odometer 170.

Although only one camera unit 300 is illustrated in FIG. 2, actually, multiple (for example, five) camera units 300 may be mounted on the image-capturing system 100. Although only one illumination unit 400 is illustrated in FIG. 2 (one illumination unit 400 is illustrated for one camera unit 300), two illumination units 400 may be provided for one camera unit 300 as in one embodiment to be described later. For example, two illumination units 400 may be disposed to be separated from each other so as to have the central camera unit 300 between the illumination units 400.

Multiple sets (for example, five sets) of one camera unit 300 in the center and two illumination units 400 on both sides of the camera unit 300 may be provided.

As described with reference to FIGS. 1A and 1B, the camera unit 300 captures an image of the wall surface inside the tunnel, and the illumination unit 400 illuminates the wall surface inside the tunnel with light to allow an image to be captured by the camera unit 300.

The TOF sensor 141 measures a distance between the wall surface of the tunnel 600 and the TOF sensor 141. Specifically, the TOF sensor 141 emits light to the wall surface of tunnel 600 and measures the distance to the wall surface of tunnel 600 based on time it takes from emitting light to the wall surface to receiving light reflected from the wall surface. The TOF sensor 141 using an area sensor as a photosensor can obtain a two-dimensional contour line image whose display color varies with the distance. The IMU 160 measure the angles or angular velocities and accelerations of the three axes governing the motion of the vehicle 500, and the speedometer/odometer 170 measures the speed or travel distance of the vehicle 500. The date measured by the IMU 160 and the speedometer/odometer 170 is output to the HDD 114 via the image-capturing controller 110 and stored therein. The stored data is used later for geometric correction of the size, inclination, and the like of the image of the wall surface in image processing.

The camera unit 300 is an example of an imager (an image-capturing device) and includes a lens 331-1 and a line charge coupled device (CCD) 331-2. The line CCD 331-2 is a CCD in which pixels are one-dimensionally (linearly) arranged, and the camera unit 300 is fixed to the vehicle 500 so that the arrangement direction in which the pixels of the line CCD 331-2 are arranged intersects with the direction of movement of the vehicle 500. The lens 331-1 forms an image of a subject in a direction along the optical axis of the lens 331-1, on the imaging surface of the line CCD 331-2. The line CCD 331-2 captures the image of the subject formed by the lens 331-1. The lens 331-1 is an example of an imaging optical system. The lens 331-1 includes a lens stop 331-1a therein. The lens stop 331-1a is an iris diaphragm having an aperture blade and is a variable-diameter aperture. The diameter of the aperture can be changed by connecting a driving source such as a motor to the aperture blade and driving the motor based on a control signal. This allows a change in the amount of light passing through the lens 331-1 and a change in the brightness of the image of the subject formed by the lens 331-1.

The illumination unit 400 is an example of an illumination unit (a light emitter) and includes a lens 431-1 and a light source 431-2. The light source 431-2 may use a metal halide light or a light emitting diode (LED). The light source 431-2 illuminates a subject in the direction along the optical axis of the lens 431-1, using the lens 431-1. The lens 431-1 includes a lens stop 431-1a therein. The lens stop 431-1a is a variable-diameter aperture and enables a change in the amount of light (brightness) of illumination light emitted through the lens 431-1 by changing the diameter of the aperture. Notably, the amount of light may be adjusted by adjusting the output power of the LED of the light source 431-2, without the use of lens stop 431-1a of the lens 431-1.

Although FIG. 2 illustrates one light source 431-2 for the illumination unit 400, the illumination unit 400 may include multiple (a large number of) light sources arranged in parallel in a predetermined direction as in an embodiment described later. The arrangement direction is a direction in which multiple (a large number of) light sources are arranged in parallel in a predetermined direction. The arrangement direction may be read as parallel-arrangement direction (the arrangement direction may be synonymous with the parallel-arrangement direction).

The image-capturing controller 110 includes a central processing unit (CPU) 111, a read only memory (ROM) 112, a random access memory (RAM) 113, a hard disk drive (HDD) 114, external interface (I/F) 115, and a buzzer 116, which are electrically connected to each other via a system bus 117.

The ROM 112 stores various kinds of programs and various kinds of setting information, and the RAM 113 temporarily holds the programs and the information. The CPU 111 reads a program, date, and setting information from the ROM 112 or the like onto the RAM 113 and execute processing, to control the entire image-capturing system 100 and process image date. The processing of the image data is, for example, processing of connecting line images respectively captured by the multiple camera units 300, processing of connecting line images continuously captured at predetermined time intervals by the multiple camera units 300 in a direction of movement of the vehicle while moving the vehicle, or the like. Further, the CPU 111 implements various functions.

Some or all of control, image-data processing, and various functions, which are implemented by the CPU 111, may be implemented by a field-programmable gate array (FPGA) or an application specific integrated circuit (ASIC).

The HDD 114 stores the image date input from the camera unit 300 and the sensor date input from the TOF sensor 141, the IMU 160, and the speedometer/odometer 170, and the like. The external I/F 115 implements a user interface function for a user to operate the image-capturing system 100 and an interface function for the image-capturing system 100 to exchange information and signals with an external apparatus such as a personal computer (PC).

The buzzer 116 generates a beep sound to notify a user of a warning or the like.

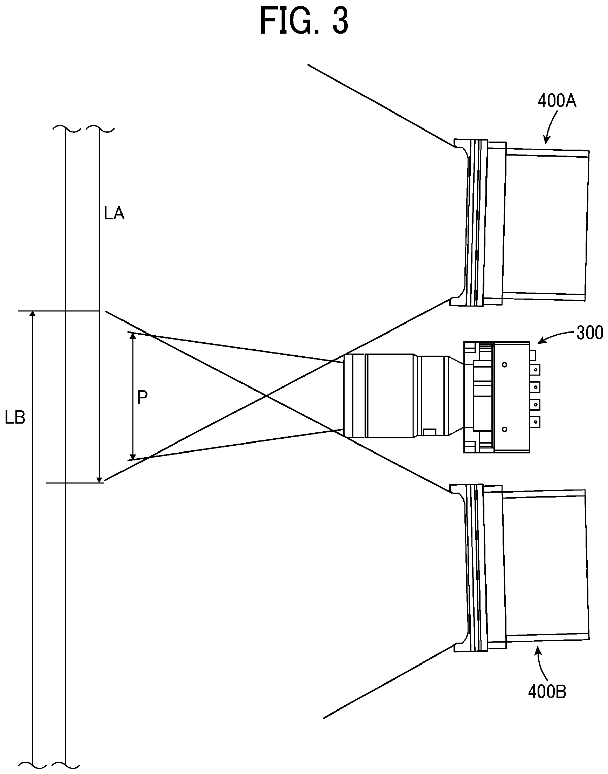

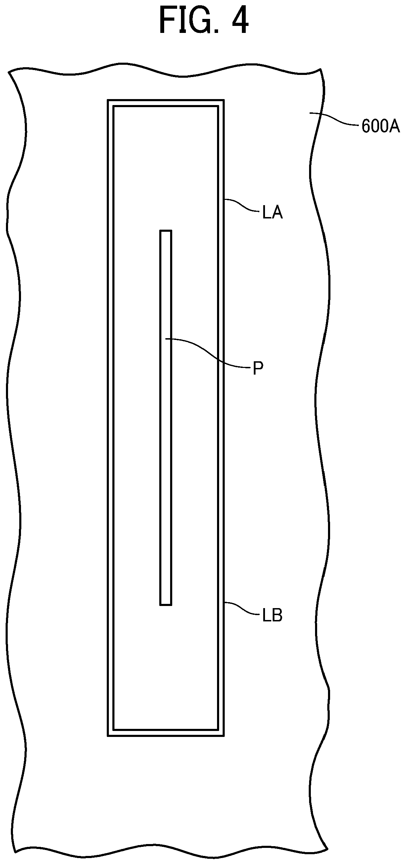

FIG. 3 is a first diagram of an irradiation range and an image-capturing range of the image-capturing system 100 according to the present embodiment, and FIG. 4 is a second diagram of the irradiation range and the image-capturing range of the image-capturing system 100 according to the present embodiment. In FIG. 3, two illumination units 400A and 400B are spaced apart from each other so as to have the central camera unit 300 between the illumination units 400. The two illumination units 400A and 400B are arranged at an angle so as to face outward.

As illustrated in FIGS. 3 and 4, the illumination unit 400A emits irradiation light having a rectangular irradiation range LA, whose longitudinal direction is an up-to-down direction (a vertical direction), in the irradiation direction (i.e., forward or to the left in FIG. 3) to the wall surface (i.e., the area 600A) of the tunnel 600 as a subject. The illumination unit 400B emits irradiation light having a rectangular irradiation range LB, whose longitudinal direction is an up-to-down direction, in the irradiation direction (i.e., forward or to the left in FIG. 3) to the wall surface (i.e., the area 600A) of the tunnel 600 as a subject. A lower part of the irradiation range LA of the illumination unit 400A and an upper part of the irradiation range LB of the illumination unit 400B in the vertical direction overlap each other.

As illustrated in FIGS. 3 and 4, the camera unit 300 has a linear image-capturing range P whose longitudinal direction is the vertical direction in the irradiation ranges LA and LB of the illumination units 400A and 400B. With this configuration, the camera unit 300 captures an image of the wall surface (the area 600A) of the tunnel 600 as the subject irradiated with the irradiation light emitted from the illumination units 400A and 400B. The image-capturing range P extends in the direction in which multiple pixels are arranged in the line CCD 331-2 of the camera unit 300. The image-capturing system 100 of the present embodiment enables an image of the wall surface (the area 600A) of the tunnel 600 as the subject to be captured with irradiation light emitted from the two illumination units 400A and 400B.

With the aging of social infrastructure, the importance of its maintenance and management is increasing, and the efficiency and safety of tunnel inspection are important issues.

The technology has been developed to capture images of the wall surface of tunnels with a line camera having a high shutter speed attached onto a vehicle while the vehicle is running. The technology is typically used in large-sized vehicles on which a battery and equipment can be mounted. To use the technology in general vehicles in addition to the large-sized vehicles, a tunnel monitoring system that is mountable onto the general vehicles is considered. The tunnel monitoring system uses a camera with an extended depth of field and a line lighting device that efficiently illuminates only a photographing location and has a compact system structure that allows fewer devices to be mounted thereon. This tunnel monitoring system enables capturing of images of the tunnel wall surfaces while a general vehicle mounted with the tunnel monitoring system is running.

However, conventional tunnel monitoring systems use a single high-power monochromatic LED alone for one illumination unit to reduce the size of the lighting device. Conventional tunnel monitoring systems capture merely a monochrome image alone. As a result, the taken photograph does not display an image close to the actual appearance. In addition, rust or water leakage cannot be detected, and the color of the chalk cannot be determined. If the light source is displaced by a white LED, the output power is insufficient to take a photograph of a tunnel wall surface.

In addition, Japanese Unexamined Patent Application Publication No. 2007-225591 describes a very small substantial light distribution angle, which results because the line lighting having the same length as the length of the line in which the LEDs are arranged in parallel emits light directly downward. Such line lighting is used for inspection, particularly in a close range (or such line lighting is suitable for the inspection in a close range alone). The tunnel monitoring systems, which photograph wall surfaces of tunnels of various sizes, involve emitting light to a target wall surface away from the light device and having a length of several meters. This means that the lighting device involves a wide light distribution angle.

Further, Japanese Unexamined Patent Application Publication No. 2016-051203 faces challenges in terms of the deficient number of LEDs because the maximum number of LEDs available is two, and poor cost performance due to the use of a free-form surface lens although wide in light distribution angle.

The lighting device and the image-capturing system according to the present embodiment primarily aims to uniformly irradiate a wide irradiation range (e.g., ranging from close range to long range with a large light distribution angle). The lighting device and the image-capturing system according to the present embodiment secondarily aims to capture a color image of a tunnel wall surface in a tunnel monitoring system that is mountable on a general vehicle.

For these purposes, the lighting device and image-capturing system according to the present embodiment may be a line lighting device using multiple LEDs in a row. In addition, the lighting device and image-capturing system according to the present embodiment using multiple (a large number of) LEDs serve as a wide-angle line illumination to efficiently illuminate a photographing area, whose image is to be captured. In the lighting device and image-capturing system according to the present embodiment, multiple illumination optical systems, each including multiple LEDs arranged in parallel in the longitudinal direction, are arranged, forming an angle with each other, so that irradiation beams from the multiple illumination optical systems overlap each other at the area whose image is to be captured. This achieves a line illumination with a wide-angle light distribution.

### Conventional illumination optical system

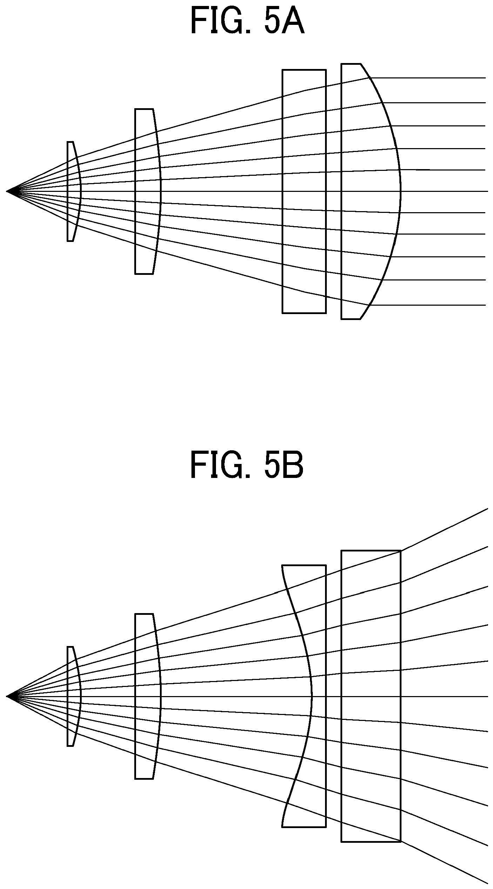

FIGS. 5A and 5B are illustrations of a first example of a conventional illumination optical system. As illustrated in FIGS. 5A and 5B, a conventional illumination optical system includes a special LED light source, a lens, a cylindrical lens having negative power in one direction, and a cylindrical lens having positive power in one direction.

The illumination optical system in FIG. 5A includes a positive cylindrical lens, and the illumination optical system in FIG. 5B includes a negative cylindrical lens. The cylindrical lens having positive power in one direction serves to converge a light beam in the traverse direction of the line, and the cylindrical lens having negative power in another direction serves to correct spherical aberration in the longitudinal direction of the line. In the case of a line illumination, power is exerted only in the traverse direction of the line using the positive cylindrical lens to create parallel light in the traverse direction of the line, and no power is exerted in the longitudinal direction to create diffused light. When such a line illumination has a large angle of light distribution, at least two cylindrical lenses (one is a positive cylindrical lens, and the other is a negative cylindrical lens) are used as described in the first embodiment of the present disclosure to be described below.

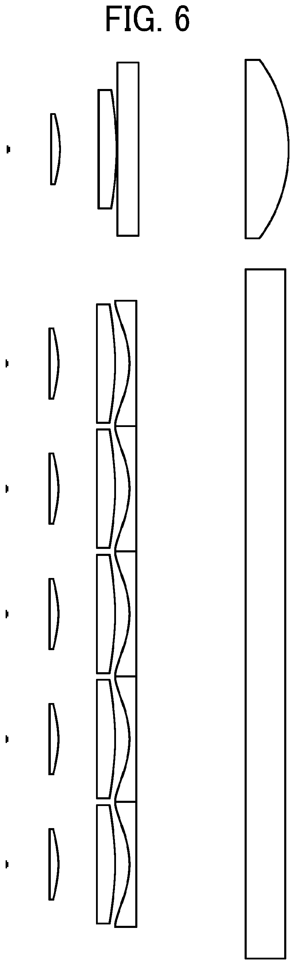

FIG. 6 is an illustration of a second example of a conventional illumination optical system. For example, a white line illumination with high illuminous intensity is used to allow color images to be captured and used in the tunnel monitoring system. Further, multiple LED light sources are used to obtain brightness sufficient to capture images, which is difficult to obtain in a structure with a single light source. When the LEDs are arranged in parallel in one direction in order to increase the output power of the illumination light, the LEDs may be arranged in parallel in the traverse direction or the longitudinal direction of the line. However, when the LEDs are arranged in parallel in the traverse direction of the line, the diameter of the cylindrical lens that converges light in the traverse direction becomes a bottleneck, which causes upsizing. When the LEDs are arranged in parallel in the longitudinal direction of the line, the diameter of the cylindrical lens that corrects spherical aberration in the longitudinal direction becomes a bottleneck, which causes upsizing. In other words, the illumination optical system according to a second comparative example fails to avoid the upsizing of the device. FIG. 6 illustrates a case where the LEDs are arranged in parallel in the longitudinal direction of the line. In another case where the LEDs are arranged in parallel in the traverse direction of the line, the LEDs arranged in parallel in the traverse direction of the line occupy space for the lens diameters of the cylindrical lenses for the LEDs, which causes upsizing of the device. Since the lighting device and the image-capturing system according to the present embodiment are used in a tunnel monitoring system that can be mounted on a general vehicle, downsizing is a significant issue.

### First Embodiment

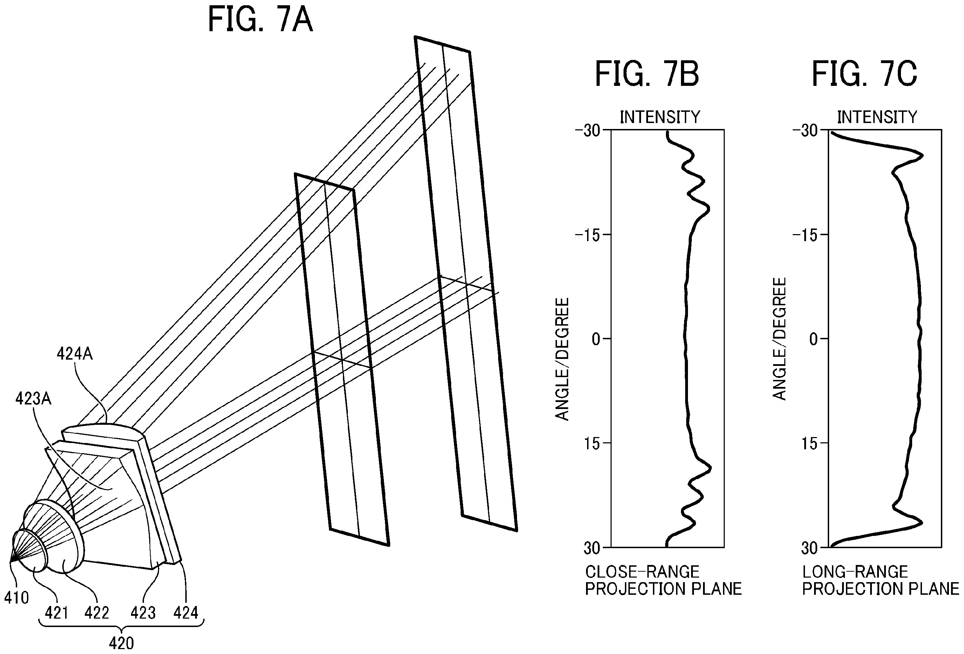

FIGS. 7A, 7B, and 7C are diagrams of a lighting device according to a first embodiment. FIG. 7A is a perspective view of the configuration of the lighting device according to the first embodiment. FIG. 7B is a graph of the illuminance distribution of linear illumination light on a close-range projection plane. FIG. 7C is a graph of the illuminance distribution of linear illumination light on a long-range projection plane.

The close-range projection plane in FIG. 7B is at a distance of 1 m from the lighting device. The long-range projection plane in FIG. 7C is at a distance of 8 m from the lighting device. However, the distance between the close-range projection plane and the long-range projection plane may be in a range from 30 cm to 10 m, for example.

The lighting device according to the first embodiment includes a light source 410 (an LED) and a condensing optical system 420 that concentrates light from the light source 410 into a line. The condensing optical system 420 includes a positive lens 421, a positive lens 422, a negative cylindrical lens 423, and a positive cylindrical lens 424.

In other words, the first condensing optical system 420 includes a first positive cylindrical lens 424 having a convex cylindrical surface 424A and configured to concentrate the first light beam into the line shape; and a first negative cylindrical lens 423 having a concave cylindrical surface 423A. The second condensing optical system 420 includes: a second positive cylindrical lens 424 having a convex cylindrical surface 424A and configured to concentrate the second light beam into the line shape; and a second negative cylindrical lens 423 having a concave cylindrical surface 423A.

Although two positive lenses 421 and 422 are disposed in front of the negative cylindrical lens 423 and the positive cylindrical lens 424 in FIG. 7A, there is a certain latitude in the number of the lenses in front of the negative cylindrical lens 423 and the positive cylindrical lens 424, and the positive and negative patterns of lenses may be changed. In other words, various design changes are possible. For example, one positive lens or one negative lens may be disposed in front of the negative cylindrical lens 423 and the positive cylindrical lens 424. Alternatively, three or more lenses obtained by combining positive and negative lenses may be used.

The negative cylindrical lens 423 has a concave cylindrical surface 423A, and the positive cylindrical lens 424 has a convex cylindrical surface 424A. The axis line of the concave cylindrical surface 423A of the negative cylindrical lens 423 corresponds to the traverse direction of a plane of the light emitted from the light source 410 and concentrated into a line shape. The axis line of the convex cylindrical surface 424A of the positive cylindrical lens 424 corresponds to the longitudinal direction of the plane of the light emitted from the light source 410 and concentrated into a line shape. The axis line of the concave cylindrical surface 423A of the negative cylindrical lens 423 is orthogonal to the axis line of the convex cylindrical surface 424A of the positive cylindrical lens 424. In FIG. 7A, the axis line of the concave cylindrical surface 423A of the negative cylindrical lens 423 corresponds to the traverse direction of the plane of the light emitted from the light source 410 is concentrated into a line shape. The axis line of the convex cylindrical surface 424A of the positive cylindrical lens 424 corresponds to the longitudinal direction of the plane of the light emitted from the light source 410 and concentrated into a line shape. This relation may be reversed.

In other words, the first convex cylindrical surface 424A has a first axis line corresponding to one of a longitudinal direction and a transverse direction of the first light beam emitted from each of the first multiple light sources and concentrated into the line shape, and the first concave cylindrical surface 423A has a second axis line corresponding to another of the longitudinal direction and the transverse direction of the first light beam. The first axis line is orthogonal to the second axis line. The second convex cylindrical surface 424A has a third axis line corresponding to one of a longitudinal direction and a transverse direction of the second light beam emitted from each of the second multiple light sources and concentrated into the line shape. The second concave cylindrical surface 423A has a fourth axis line corresponding to another of the longitudinal direction and the transverse direction of the second light beam. The third axis line is orthogonal to the fourth axis line.

The concave cylindrical surface 423A of the negative cylindrical lens 423 faces the light source 410, and the convex cylindrical surface 424A of the positive cylindrical lens 424 faces the plane of the light emitted from the light source 410 and concentrated into a line shape.

In other words, the first convex cylindrical surface 424A faces a projection plane, and the first concave cylindrical surface 423A faces the first multiple light sources 410A. The second convex cylindrical surface 424B faces the projection plane, and the second concave cylindrical surface 423B faces the second multiple light sources 410B.

The negative cylindrical lens 423 has a planar portion where the concave cylindrical surface 423A is not formed, and the positive cylindrical lens 424 has a planar portion where the convex cylindrical surface 424A is not formed. The negative cylindrical lens 423 and the positive cylindrical lens 424 are disposed with the planar portions facing each other. This arrangement allows a higher space efficiency of the condensing optical system 420 and thus achieve downsizing of the lighting device.

The arrangement order of the negative cylindrical lens 423 and the positive cylindrical lens 424 may be changed, and there is also a degree of flexibility in the surfaces on which the concave cylindrical surface 423A and the convex cylindrical surface 424A are formed. For example, the concave cylindrical surface 423A of the negative cylindrical lens 423 may face the plane of the light emitted from the light source 410 and concentrated into a line shape, and the convex cylindrical surface 424A of the positive cylindrical lens 424 may face the light source 410.

As illustrated in FIG. 7B and 7C, the cylindrical lens 423 having negative power in the longitudinal direction corrects spherical aberration to convert a bundle of diverging light beams emitted from the light source 410to parallel light. In other words, the cylindrical lens 423 outputs the parallel light. This enables line illumination with a uniform illuminance distribution irrespective of the distance to the projection surface.

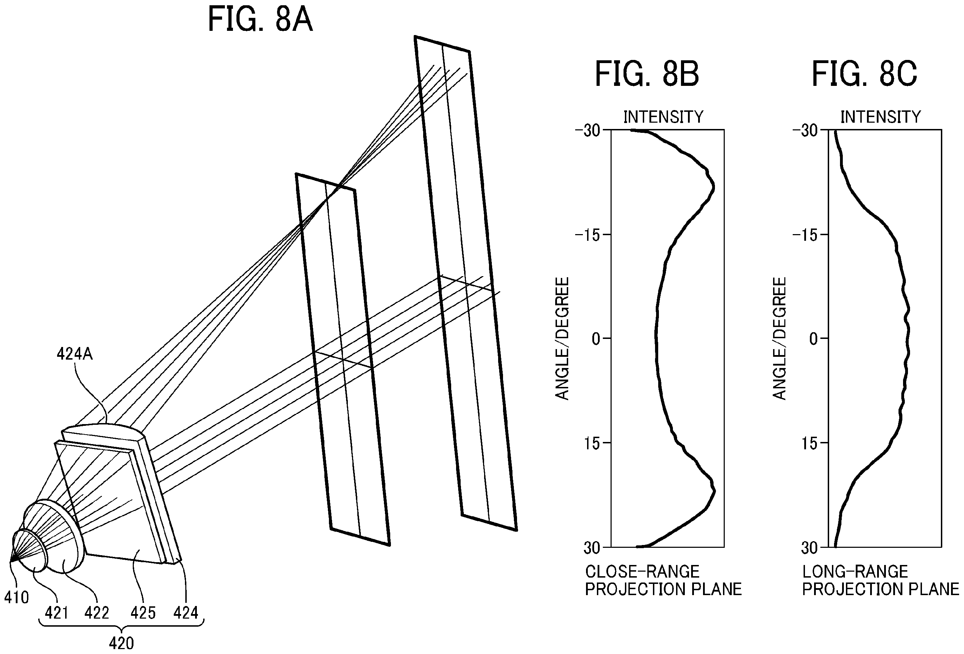

FIGS. 8A, 8B, and 8C are diagrams of a lighting device according to a comparative example. In this comparative example, the negative cylindrical lens 423 is omitted from the lighting device of the first embodiment in FIGS. 7A to 7C, and instead, a plane-parallel plate 425 having no power is disposed. The lighting device without the use of the negative cylindrical lens 423 for correcting spherical aberration in the longitudinal direction allows emission of parallel light beams at an angle of light distribution up to approximately 20 degrees and causes converging light beams at an angle of light distribution of greater than 20 degrees because of spherical aberration. The tunnel monitoring system, which involves an angle of light distribution of 45 degrees to achieve the intended performance, is to use the negative cylindrical lens 423 of the first embodiment. When the negative cylindrical lens 423 is not incorporated, and the positive cylindrical lens 424 is incorporated to convert a bundle of light beams emitted from the light source 410 to parallel light; the bundle of diverging light beams emitted from the light source 410, however, converges because of spherical aberration caused by a difference in optical path to the positive cylindrical lens 424. This causes a variation in intensity with the distance to the projection plane and results in failure of line illumination with the uniform distribution.

### Second Embodiment

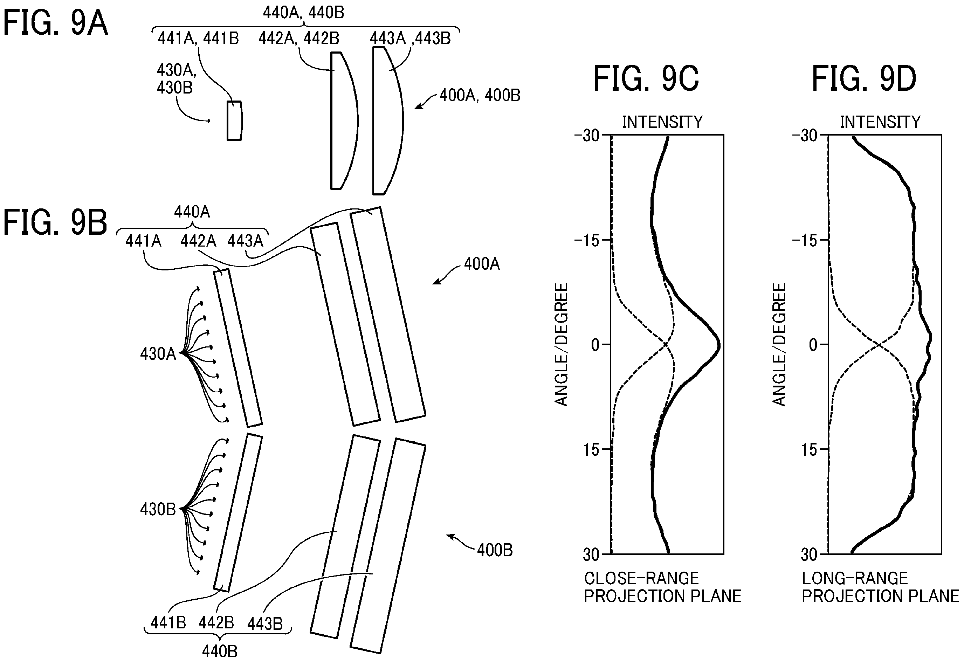

FIGS. 9A, 9B, 9C, and 9D are diagrams of a lighting device according to the second embodiment. FIGS. 9A and 9B are illustrations of the configuration of the lighting device. FIG. 9C is a graph of the illuminance distribution of linear illumination light on a close-range projection plane. FIG. 9D is a graph of the illuminance distribution of linear illumination light on a long-range projection plane. The close-range projection plane in the 9C is at a distance of 1 m from the lighting device. The long-range projection plane in the 9D is at a distance of 8 m from the lighting device. However, the distance between the close-range projection plane and the long-range projection plane may be in a range from 30 cm to 10 m, for example.

FIG. 9A is an illustration of multiple light sources 430A and 430B and condensing optical systems 440A and 440B of two illumination units 400A and 400B as viewed in a direction perpendicular to the arrangement direction of the multiple light sources 430A and 430B. FIG. 9B is an illustration of the multiple light sources 430A and 430B and the condensing optical systems 440A and 440B of the illumination units 400A and 400B as viewed in the arrangement direction of the multiple light sources 430A and 430B.

The lighting device of the second embodiment incorporating a combination of two illumination units 400A and 400B enables an angle of light distribution of 50 degrees. In this configuration, each of the illumination units 400A and 400B is designed to emit light having an angle of light distribution of approximately 25 degrees. This configuration eliminates the use of the cylindrical lens 423 having negative power in the longitudinal direction to correct spherical aberration and allows the parallel arrangement of the LEDs in the longitudinal direction since the cylindrical lens 423 having negative power is the bottleneck in the parallel arrangement of the LEDs in the longitudinal direction as described above for the first embodiment with reference to FIG. 7A. When multiple camera units 300 (e.g., five camera units) as image-capturing devices are used, multiple sets of the illumination units 400A and 400B are used for the camera units 300, respectively. The number of sets of the illumination units 400A and 400B is 2 or more. At least two illumination units are used.

The illumination unit 400A includes multiple (a large number of) light sources 430A arranged in a predetermined direction and a condensing optical system 440A disposed to extend in the arrangement direction of the multiple light sources 440A. In the illumination unit 400A, the multiple light sources 430A emit light beams, the condensing optical system 440A concentrates the light beam emitted from the multiple light sources 430A and passed through the condensing optical system 440A into a line. The condensing optical system 440A includes a positive lens 441A, a positive lens 442A, and a positive lens 443A. In FIGS. 9A and 9B, each of the positive lens 441A, the positive lens 442A, and the positive lens 443A is a plano-convex lens. Alternatively, each of the positive lens 441A, the positive lens 442A, and the positive lens 443A may be formed to have curvatures on both surfaces. Further, the configuration of the condensing optical system 440A is flexible, and the condensing optical system 440A may include one, two, or four or more lenses.

The illumination unit 400B includes multiple (a large number of) light sources 430B arranged in a predetermined direction and a condensing optical system 440B disposed to extend in the arrangement direction of the multiple light sources 440B. In the illumination unit 400B, the multiple light sources 430B emit light beams, the condensing optical system 440B concentrates the light beam emitted from the multiple light sources 430B and passed through the condensing optical system 440B into a line. The condensing optical system 440B includes a positive lens 441B, a positive lens 442B, and a positive lens 443B. In FIGS. 9A and 9B, each of the positive lens 441B, the positive lens 442B, and the positive lens 443B is a plano-convex lens. Alternatively, each of the positive lens 441B, the positive lens 442B, and the positive lens 443B may be formed to have curvatures on both surfaces. Further, the configuration of the condensing optical system 440B is flexible, and the condensing optical system 440B may include one, two, or four or more lenses.

The condensing optical systems 400A and 400B of the two illumination units 440A and 440B may include cylindrical lenses. The cylindrical lenses each have no power in the arrangement direction of the multiple light sources 430A and 430B and have positive power in a direction perpendicular to the arrangement direction of the multiple light sources 430A and 430B. In other words, the condensing optical systems 400A and 400B of the two illumination units 440A and 440B may include cylindrical lenses each having no power in the arrangement direction of the multiple light sources 430A and 430B and having positive power in a direction perpendicular to the arrangement direction of the multiple light sources 430A and 430B. In FIGS. 9A and 9B, the positive lenses 441A, the positive lens 442A, and 443A of the illumination unit 400A may be cylindrical lenses each having no power in the arrangement direction of the multiple light sources 430A and having positive power in a direction perpendicular to the arrangement direction of the multiple light sources 430A. Further, the positive lenses 441B, 442B, and 443B of the illumination unit 400B may be cylindrical lenses each having no power in the arrangement direction of the multiple light sources 430B and having positive power in a direction perpendicular to the arrangement direction of the multiple light sources 430B.

In the lighting device according to the second embodiment, the two illumination units 400A and 400B are arranged at an angle so that the arrangement directions of the multiple light sources 430A and 430B, the extending directions of the condensing optical systems 440A and 440B, and condensing directions in which light beams from the multiple light sources 430A and 430B are concentrated by the condensing optical systems 440A and 440B, respectively face outward. In other words, the arrangement directions of multiple light sources 430A and 430B face outward, the extending directions of the condensing optical systems 440A and 440B face outward, and the directions in which light beams emitted from the multiple light sources 430A and 430B are concentrated by the condensing optical systems 440A and 440B face outward.

A lighting device 400 includes at least two illumination units including a first illumination unit 400A and a second illumination unit 400B. The first illumination unit 400A includes first multiple light sources 430A arranged in a first arrangement direction, each of the first multiple light sources (430A) to emit a first light beam; and a first condensing optical system 440A arranged in the first arrangement direction parallel to the first multiple light sources 430A. The first condensing optical system 440A concentrates the first light beam into a line shape. The second illumination unit 400B includes second multiple light sources 430B arranged in a second arrangement direction, each of the second multiple light sources (430B) to emit a second light beam; and a second condensing optical system 440B arranged in the second arrangement direction parallel to the second multiple light sources 430B. The second condensing optical system 440B concentrates the second light beam into the line shape. The first arrangement direction and the second arrangement direction form a reflex angle, and the first illumination unit and the second illumination face outward.

This arrangement allows the lighting device to uniformly illuminate a wide irradiation range (for example, ranging from the close range to the long range, e.g., from 30 cm to 10 m with a wide angle of light distribution of 45 degrees or more). The two illumination units 400A and 400B are arranged at such relative positions that the linear illuminance distributions of the illumination units 400A and 400B are combined with each other on the projection plane.

In other words, a first illuminance distribution of the first light beam having the line shape and emitted from the first illumination unit 400A and a second illuminance distribution of the second light beam having the line shape and emitted from the second illumination unit 400B are combined on a projection plane.

In the lighting device according to the second embodiment, the two illumination units 400A and 400B are disposed so as to form an angle with each other. Further, the illuminance distributions of the illumination units 400A and 400B are overlapped on the projection plane so that the angle of light distribution is approximately doubled. At this time, the illuminance distribution on the close-range projection plane and the illuminance distribution on the long-range projection plane are different from each other due to spherical aberration. For the overlapping illuminance distribution, the close-range projection plane is adjusted by the distance and angle between the illumination units, and the long-range projection plane is adjusted by the angle between the illumination units. In this configuration, an angle between the normal lines of the illumination units is approximately 25 degrees. When the angle of view is measured with reference to the midpoint between the centers of the light sources (LEDs) arranged in parallel (array) in the illumination units, the full angle of view is 50 degrees or more on the close-range projection plane, but its illuminance distribution is linear illuminance distribution with poor uniformity. On the long-range projection plane, a uniform linear illuminance distribution with a full angle of view of 50 degrees or more is obtained. In FIGS. 9C and 9D, the illuminance distributions of the two illumination units 400A and 400B are indicated by broken lines, and the combined illuminance distribution of the two illumination units 400A and 400B is indicated by solid lines.

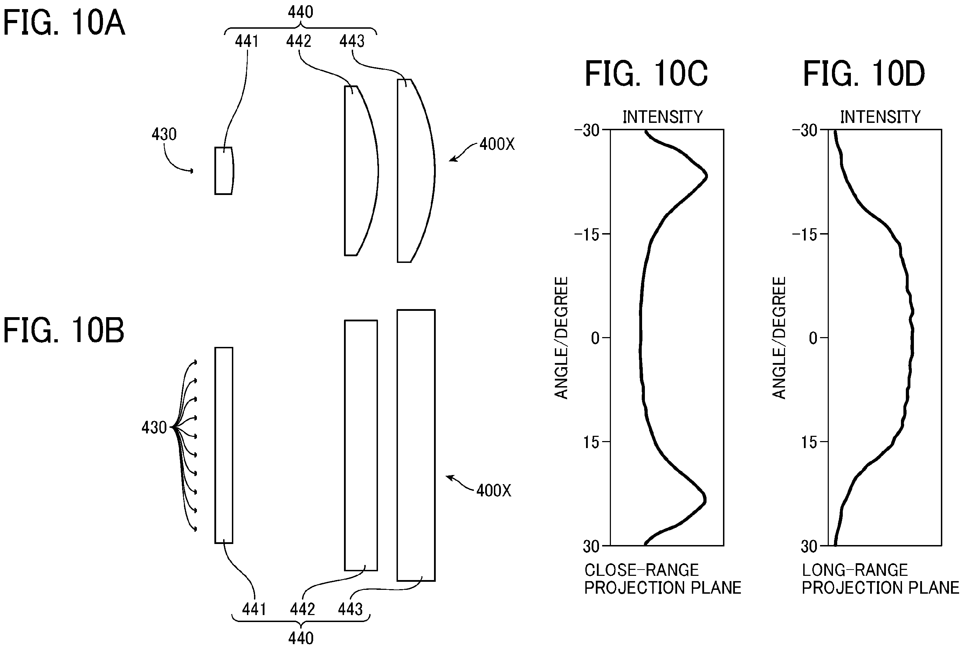

FIGS. 10A, 10B, 10C, and 10D are diagrams of a lighting device according to a comparative example. In this comparative example, an illumination unit 400X, which is one of the illumination units 400A and 400B of the second embodiment illustrated in FIGS. 9A, is disposed without an angle. FIG. 10A is an illustration of multiple light sources 430 and a condensing optical system 440 of the illumination unit 400X as viewed in a direction perpendicular to the arrangement direction of the multiple light sources 430. FIG. 10B is an illustration of the multiple light sources 430 and the condensing optical system 440 of the illumination unit 400X as viewed in the arrangement direction of the multiple light sources 430. The illumination unit 400X of the comparative example also has a lens configuration in which multiple light sources 430 are arranged in parallel to achieve miniaturization. As described above, a cylindrical lens for correcting spherical aberration in the longitudinal direction may be omitted to more closely arrange light sources (e.g., LEDs). In this arrangement, the LEDs are arranged in parallel, each taking up space for the length of its LED substrate. This arrangement enables a compact device with more LEDs.

However, the comparative example in FIGS. 10A to 10D, which omits correction of spherical aberration, causes a variation in illuminance distribution with the distance to the projection plane and fails to achieve a wider angle. For the angle of view measured from the center of the LEDs arranged in parallel, the linear illuminance distribution range has a full angle of view of approximately 45 degrees on the close-range projection plane and approximately 25 degrees on the long-range projection plane. This means that the configuration of the comparative example without the use of a cylindrical lens for correcting spherical aberration to obtain a compact device causes a smaller angle of light distribution of the illumination optical system.

### Third Embodiment

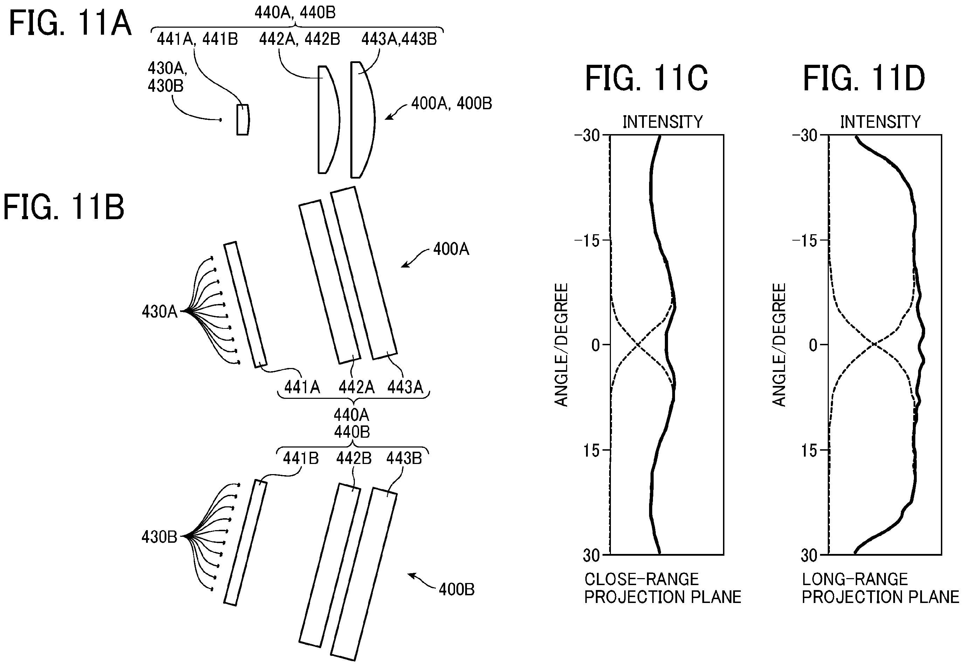

FIGS. 11A, 11B, 11C, and 11D are diagrams of a lighting device according to the third embodiment. FIGS. 11A and 11B are illustrations of the configuration of the lighting device. FIG. 11C is a graph of the illuminance distribution of linear illumination light on a close-range projection plane. FIG. 11D is a graph of the illuminance distribution of linear illumination light on a long-range projection plane. The close-range projection plane in FIG. 11C is at a distance of 1 m from the lighting device. The long-range projection plane in FIG. 11D is at a distance of 8 m from the lighting device. However, the distance between the close-range projection plane and the long-range projection plane may be in a range from 30 cm to 10 m, for example.

FIG. 11A is an illustration of multiple light sources 430A and 430B and condensing optical systems 440A and 440B of two illumination units 400A and 400B as viewed in a direction perpendicular to the arrangement direction of the multiple light sources 430A and 430B. FIG. 11B is an illustration of the multiple light sources 430A and 430B and the condensing optical systems 440A and 440B of the illumination units 400A and 400B as viewed in the arrangement direction of the multiple light sources 430A and 430B.

In the second embodiment described with reference to FIGS. 9A to 9D, since the distance (interval in the vertical direction) between the illumination units 400A and 400B is too short, the illuminance distribution on the close-range projection plane is too strong due to a large overlapping portion between the illuminance distributions of the illumination units 400A and 400B. In the third embodiment, the distance (i.e., the interval in the vertical direction (or the up-to-down direction) between the illumination units 400A and 400B is increased to adjust the overlapping portion between the illuminance distributions of the illumination units 400A and 400B on the close-range projection plane and adjust the illuminance distribution on the close-range projection plane. As a result, the line illumination with a uniform illuminance distribution is obtained on projection planes in a range from close distance to long distance. The angle between the normal lines of the illumination units 400A and 400B is approximately 25 degrees, and the distance (interval in the vertical direction) between the illumination units 400A and 400B is approximately 450 mm. When the angle of view is measured with reference to the midpoint between the centers of the illumination units 400A and 400B and the light sources (LEDs) 430A and 440B arranged in parallel, a uniform linear illuminance distribution with a full angle of 50 degrees or more is obtained on both the close-range projection plane and the long-range projection plane.

### Fourth Embodiment

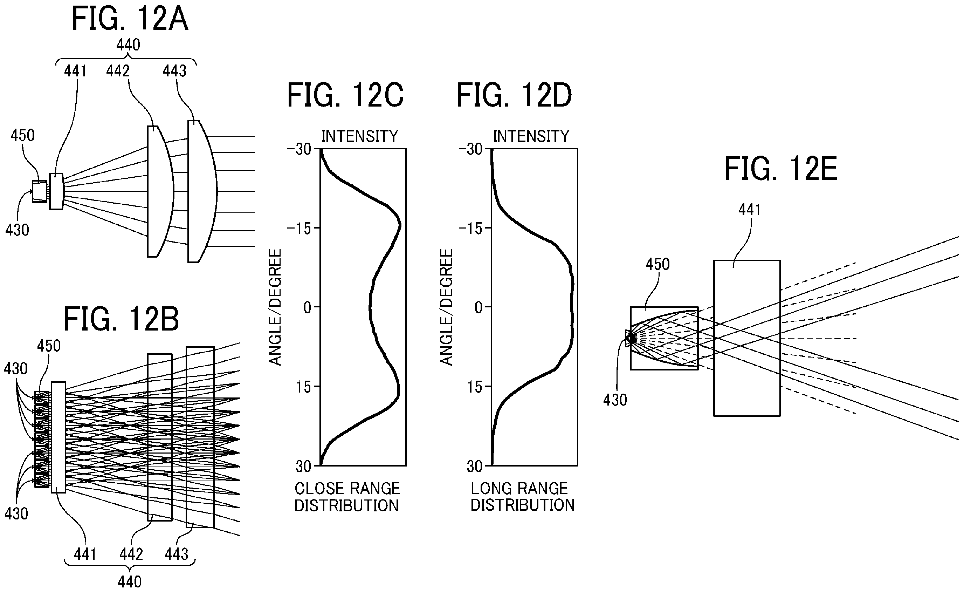

FIGS. 12A, 12B, 12C, 12D, and 12E are diagrams of a lighting device according to the fourth embodiment. FIG. 12A and FIG. 12B are diagrams of the configuration of the lighting device. FIG. 12C is a graph of the close-range distribution of linear illumination light. FIG. 12D is a graph of the long-range distribution of linear illumination light. FIG. 12E is an illustration of how a reflector restricts a divergence angle of a light beam emitted from a light source. The close range in FIG. 12C is at a distance of 1 m from the lighting device. The long range in FIG. 12D is at a distance of 8 m from the lighting device. However, the distance between the close range and the long range may be in a range from 30 cm to 10 m, for example.

FIG. 12A is an illustration of multiple light sources 430 and a condensing optical system 440 of the illumination unit 400 as viewed in a direction perpendicular to the arrangement direction of the multiple light sources 430. FIG. 12B is an illustration of the multiple light sources 430 and the condensing optical system 440 of the illumination unit 400 as viewed in the arrangement direction of the multiple light sources 430.

In the lighting device of the fourth embodiment, the multiple light sources 430 are provided with reflectors 450 to restrict the divergence angle of a light beam emitted from each light source 430, thereby improving the luminous intensity. The tunnel monitoring system can photograph a larger tunnel with a higher luminous intensity of the line illumination. The fourth embodiment uses a reflector 450 to narrow the divergence angle of light emitted from the LEDs and thus allow more amount of light to be concentrated into the line illumination.

Each of the first multiple light sources 430A includes a first reflector 450A restricts a divergence angle of the first light beam emitted from each of the first multiple light sources 430A. Each of the second multiple light source 430B includes a second reflector 450B configured to restrict the divergence angle of the second light beam emitted from each of the second multiple light sources 430B.

This configuration effectively concentrates light diverged in all directions by the LEDs, into the line illumination. For the angle of view measured from the center of the LEDs arranged in parallel, the linear illuminance distribution range has a full angle of view of approximately 45 degrees on the close-range projection plane and approximately 25 degrees on the long-range projection plane.

### Fifth Embodiment

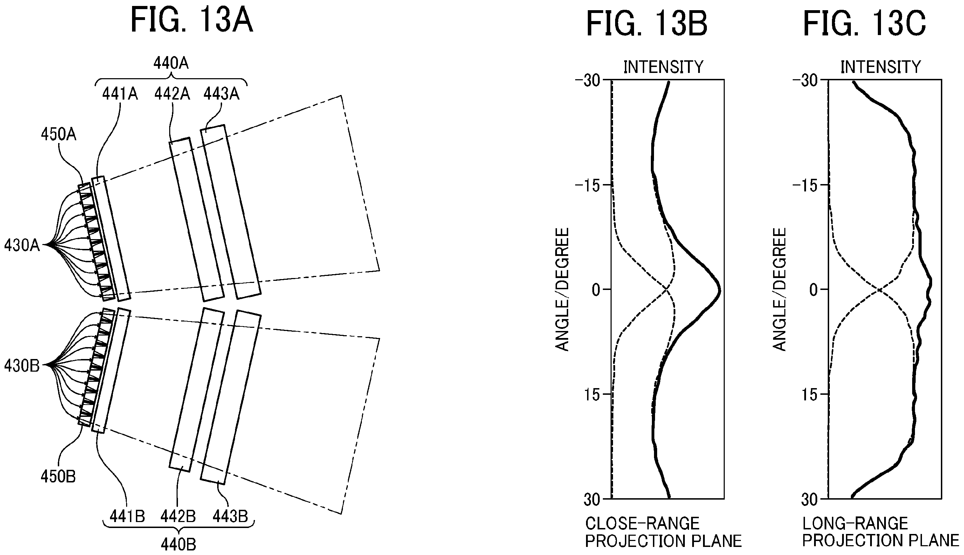

FIGS. 13A, 13B, and 13C are diagrams of a lighting device according to a fifth embodiment. FIG. 13A is an illustration of the configuration of the lighting device. FIG. 13B is a graph of the illuminance distribution of linear illumination light on a close-range projection plane. FIG. 13C is a graph of the illuminance distribution of linear illumination light on a long-range projection plane. The close-range projection plane in the 13B is at a distance of 1 m from the lighting device. The long-range projection plane in the 13C is at a distance of 8 m from the lighting device. However, the distance between the close-range projection plane and the long-range projection plane may be in a range from 30 cm to 10 m, for example.

FIG. 13A is a diagram of multiple light sources 430A and 430B and condensing optical systems 440A and 440B of two illumination units 400A and 400B as viewed in the arrangement direction in which the multiple light sources 430A and 430B are arranged.

In the lighting device of the fifth embodiment, reflectors 430A and 430B are provided in the multiple light sources 450A and 450B of the lighting device of the second embodiment, respectively. The two illumination units 400A and 400B are disposed so as to form an angle with each other. Further, the illuminance distributions of the illumination units 400A and 400B are overlapped on the projection plane so that the angle of light distribution is approximately doubled. In this configuration, an angle between the normal lines of the illumination units 400A and 400B is approximately 25 degrees. When the angle of view is measured with reference to the midpoint between the centers of the light sources (LEDs) arranged in parallel (array) in the illumination units 400A and 400B, the full angle of view is 60 degrees or more on the close-range projection plane and 50 degrees or more on the long-range projection plane. This provides a uniform linear illuminance distribution.

### Sixth Embodiment

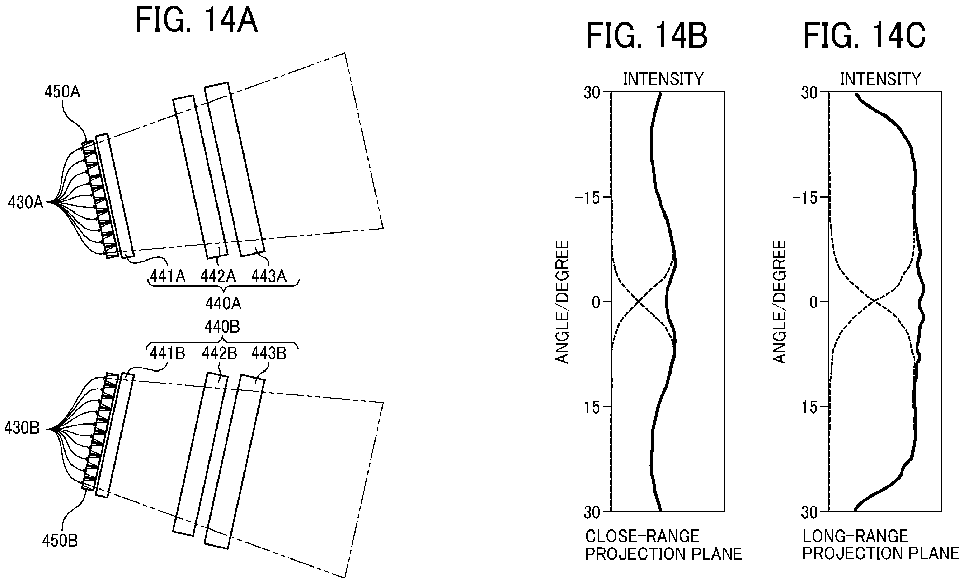

FIGS. 14A, 14B, and 14C are diagrams of a lighting device according to a sixth embodiment. FIG. 14A is an illustration of the configuration of the lighting device. FIG. 14B is a graph of the illuminance distribution of linear illumination light on a close-range projection plane. FIG. 14C is a graph of the illuminance distribution of linear illumination light on a long-range projection plane. The close-range projection plane in the 14B is at a distance of 1 m from the lighting device. The long-range projection plane in the 14C is at a distance of 8 m from the lighting device. However, the distance between the close-range projection plane and the long-range projection plane may be in a range from 30 cm to 10 m, for example.

FIG. 14A is a diagram of multiple light sources 430A and 430B and condensing optical systems 440A and 440B of two illumination units 400A and 400B as viewed in the arrangement direction of the multiple light sources 430A and 430B.

In the lighting device of the sixth embodiment, reflectors 430A and 430B are provided in the multiple light sources 450A and 450B of the lighting device of the third embodiment. In the sixth embodiment, the distance (interval in the vertical direction) between the two illumination units 400A and 400B is increased more to reduce the overlap of the illuminance distributions of the illumination units 400A and 400B on the close-range projection plane. This configuration allows a uniform line illumination at close distance and long distance, and thus provides the line illumination that uniformly illuminates tunnel wall surfaces of various sizes. The angle between the normal lines of the illumination units 400A and 400B is 25 degrees, and the distance (interval in the vertical direction) between the illumination units 400A and 400B is approximately 110 mm. When the angle of view is measured with reference to the midpoint between the centers of the LEDs arranged in parallel in the illumination units, both the close-range projection plane and the long-range projection plane have a uniform linear illuminance distribution with a full angle of 50 degrees or more.

### Seventh Embodiment

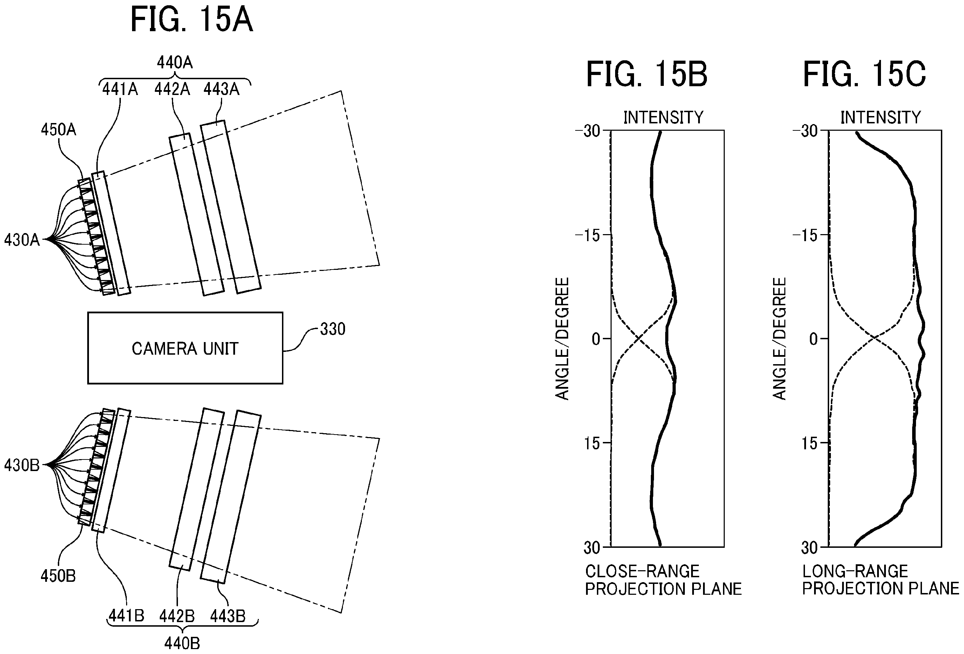

FIGS. 15A to 15C are illustrations of a lighting device according to a seventh embodiment of the present disclosure. FIG. 15A is an illustration of the configuration of the lighting device. FIG. 15B is a graph of the illuminance distribution of linear illumination light on a close-range projection plane. FIG. 15C is a graph of the illuminance distribution of linear illumination light on a long-range projection plane. The close-range projection plane in the 15B is at a distance of 1 m from the lighting device. The long-range projection plane in the 15C is at a distance of 8 m from the lighting device. However, the distance between the close-range projection plane and the long-range projection plane may be in a range from 30 cm to 10 m, for example.

FIG. 15A is a diagram of multiple light sources 430A and 430B and condensing optical systems 440A and 440B of two illumination units 400A and 400B as viewed in the arrangement direction of the multiple light sources 430A and 430B.

In the seventh embodiment, the two illumination units 400A and 400B are spaced from each other with a camera unit 300 therebetween. In other words, the camera unit 300 is disposed in space between the illumination units 400A and 400B arranged with a certain distance (interval in the vertical direction) therebetween as in the sixth embodiment. In the seventh embodiment, since the illumination optical systems are symmetrically arranged above and below (alternatively, in front and rear, or left and right of) the camera unit 300, the optical axis of the camera unit 300 and the optical axis of the line illumination coincide with each other, and appropriate photographing can be performed. At this time, the imaging angle of view of the line camera is a full angle of 45 degrees, and the illumination unit provides uniform line illumination with a full angle of 50 degrees or more on both the close-range projection plane and the long-range projection plane with reference to the entrance pupil of the camera. This enables the photographing range of the camera to be illuminated in a wide range from close range to long range.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A lighting device (400) comprising:
at least two illumination units (400A, 400B) including:
a first illumination unit (400A) including:
first multiple light sources (430A) arranged in a first arrangement direction, and each of the first multiple light sources (430A) configured to emit a first light beam; and
a first condensing optical system (440A) arranged in the first arrangement direction parallel to the first multiple light sources (430A), the first condensing optical system (440A) configured to concentrate the first light beam into a line shape; and
a second illumination unit (400B) including:
second multiple light sources (430B) arranged in a second arrangement direction, and each of the second multiple light sources (430B) configured to emit a second light beam; and
a second condensing optical system (440B) arranged in the second arrangement direction parallel to the second multiple light sources (430B), the second condensing optical system (440B) configured to concentrate the second light beam into the line shape;
wherein the first illumination unit and the second illumination face outward.

2. The lighting device (400) according to claim 1,
wherein the first illumination unit (400A) and the second illumination unit (400B) are spaced away from each other with the image-capturing device (300) between the first illumination unit (400A) and the second illumination unit (400B).

3. The lighting device (400) according to claim 1 or 2,
wherein a first illuminance distribution of the first light beam having the line shape concentrated by the first condensing optical system (440A) and a second illuminance distribution of the second light beam having the line shape concentrated by the second condensing optical system (440B) are combined on a projection plane.

4. The lighting device (400) according to any one of claims 1 to 3,
wherein the first condensing optical system (440A) includes a first cylindrical lens (441A, 442A, 443A):
having no power in the first arrangement direction, and
having positive power in a direction perpendicular to the first arrangement direction, and
the second condensing optical system (440B) includes a second cylindrical lens (441B, 442B, 443B):
having no power in the second arrangement direction, and
having positive power in a direction perpendicular to the second arrangement direction.

5. The lighting device (400) according to any one of claims 1 to 4,
wherein the first multiple light sources (430A) respectively include multiple first reflectors (450A) configured to restrict a divergence angle of the first light beam emitted from each of the first multiple light sources (430A), and
the second multiple light sources (430B) respectively include multiple second reflectors (450B) configured to restrict the divergence angle of the second light beam emitted from each of the second multiple light sources (430B).

6. An image-capturing system (100) comprising:
an image-capturing device (300); and
the lighting device (400) according to any one of claims 1 to 5.

7. The image-capturing system according to claim 6,
wherein the first illumination unit (400A) and the second illumination unit (400B) are spaced away from each other with the image-capturing device (300) between the first illumination unit (400A) and the second illumination unit (400B).

8. The lighting device (400) according to any one of claims 1 to 5,
wherein the first condensing optical system (420) includes:
a first positive cylindrical lens (424) having a convex cylindrical surface (424A) and configured to condense the first light beam into the line shape; and
a first negative cylindrical lens (423) having a concave cylindrical surface (423A).
wherein the second condensing optical system (420) includes:
a second positive cylindrical lens (424) having a convex cylindrical surface (424A) and configured to condense the second light beam into the lined shape; and
a second negative cylindrical lens (423) having a concave cylindrical surface (423A).

9. The lighting device (400) according to claim 8,
wherein the first convex cylindrical surface (424A) has a first axis line corresponding to one of a longitudinal direction and a transverse direction of the first light beam concentrated into the line shape, and
the first concave cylindrical surface (423A) has a second axis line corresponding to another of the longitudinal direction and the transverse direction of the first light beam, and
the first axis line is orthogonal to the second axis line, and
the second convex cylindrical surface (424A) has a third axis line corresponding to one of a longitudinal direction and a transverse direction of the second light beam concentrated into the line shape, and
the second concave cylindrical surface (423A) has a fourth axis line corresponding to another of the longitudinal direction and the transverse direction of the second light, and
the third axis line is orthogonal to the fourth axis line.

10. The lighting device (400) according to claim 8 or 9,
wherein the first convex cylindrical surface (424A) faces a projection plane,
the first concave cylindrical surface (423A) faces the first multiple light sources (410A),
the second convex cylindrical surface (424B) faces the projection plane, and
the second concave cylindrical surface (423B) faces the second multiple light sources (410B).

11. An image-capturing system (100) comprising:
an image-capturing device (300); and
the light device (400) according to any one of claims 8 to 10.
